# FASCICULE DE BREVET EUROPEEN

(11) **EP 2 329 652 B1**
(45) Date de publication et mention de la délivrance du brevet: **23.10.2019**
(21) Numéro de dépôt: 09740482.6
(22) Date de dépôt: 21.08.2009
(51) Int. Cl.: H04N 19/12, H04N 19/14, H04N 19/154, H04N 19/85, B64G 1/10

(54) **COMPRESSION D'IMAGES SATELLITAIRES D'OBSERVATION DE LA TERRE**
KOMPRESSION VON ERDBEOBACHTUNGSSATELLITENBILDERN
COMPRESSION OF EARTH OBSERVATION SATELLITE IMAGES

(30) Priorité: 28.08.2008 FR 0804741
(43) Date de publication de la demande: 08.06.2011
(73) Titulaire: Centre National d'Etudes Spatiales (C.N.E.S.), 75039 Paris Cedex 01 (FR)
(72) Inventeur: ANTIKIDIS, Jean-Pierre, 31320 Castanet (FR); FAVIER, Jean-Jacques, 31380 Montastruc La Conseillère (FR)
(74) Mandataire: Delorme, Nicolas
(86) Numéro de dépôt international: PCT/FR2009/051615
(87) Numéro de publication internationale: WO 2010/023397

(56) Documents cités:
- US-A- 6 031 939
- MURRONI M ET AL: "Region-based image coding for remote sensing" IMAGE PROCESSING AND ITS APPLICATIONS, 1999. SEVENTH INTERNATIONAL CON FERENCE ON (CONF. PUBL. NO. 465) MANCHESTER, UK 13-15 JULY 1999, LONDON, UK,IEE, UK, vol. 2, 13 juillet 1999 (1999-07-13), pages 808-812, XP006501151 ISBN: 978-0-85296-717-1
- STEWART R J ET AL: "An adaptive technique to maximize lossless image data compression of satellite images" ROBOTICS AND COMPUTER INTEGRATED MANUFACTURING, ELSEVIER SCIENCE PUBLISHERS BV., BARKING, GB, vol. 11, no. 2, 1 juin 1994 (1994-06-01), pages 111-115, XP004011783 ISSN: 0736-5845
- PALMER P L ET AL: "Locating Boundaries of Textured Regions", IEEE TRANSACTIONS ON GEOSCIENCE AND REMOTE SENSING, IEEE SERVICE CENTER, PISCATAWAY, NJ, US, vol. 35, no. 5, 1 September 1997 (1997-09-01), XP011020918, ISSN: 0196-2892

## Description

L'invention concerne un procédé d'acquisition, de réduction et de transmission d'images satellitaires d'observation de la Terre et plus particulièrement un procédé d'acquisition, de réduction et de transmission d'images satellitaires d'observation de la Terre mis en œuvre à bord d'un satellite, notamment en orbite basse.

Un satellite d'observation de la Terre, en particulier un satellite en orbite basse destiné à assurer des prises de vues systématiques du globe, est susceptible de faire l'acquisition d'une grande quantité et variété d'images en un laps de temps relativement court. Cette variété d'images résulte notamment du fait que ces satellites survolent diverses régions du globe au cours de leurs orbites parmi lesquelles des océans, des déserts, des villes, des forêts, des zones polaires, etc.. Il existe des instruments montés à bord des satellites destinés à ne faire l'acquisition que d'un type particulier de zones, tel que par exemple l'instrument MERIS monté sur le satellite ENVISAT destiné à mesurer la couleur des océans. Il est connu de doter les satellites de moyens permettant de déterminer les périodes pendant lesquelles chaque instrument d'acquisition de données, en particulier d'images, porté par le satellite ne doit pas acquérir d'images car les zones survolées ne correspondent pas à l'objectif visé par cet instrument. Cela permet en outre de limiter la bande passante et de ne pas utiliser inutilement les ressources. Pour chaque instrument, ces périodes d'inobservation sont en général définies par les coordonnées des zones à ne pas observer. Ces zones exclues peuvent être, selon l'objectif visé par l'instrument, des océans, des forêts, des villes, des pôles, etc.. En outre, pour les instruments qui opèrent dans le spectre visible, ces zones exclues peuvent également comprendre les zones plongées dans la nuit. En effet, un satellite survole pendant une partie de son orbite des régions plongées dans la nuit dont l'acquisition d'images est sans intérêt.

Dès lors, dans les procédés connus :
- des moyens d'identification des zones géographiques survolées déterminent si une acquisition d'une image d'une zone survolée est à effectuer,
- une acquisition d'une image de cette zone est effectuée si les moyens d'identification ont déterminé qu'une image de cette zone survolée doit être acquise,
- cette image est comprimée par des moyens de compression d'images,
- cette image comprimée est transmise vers un dispositif distant de réception d'images.

Les moyens d'identification des zones géographiques survolées permettent d'exclure un certain nombre de zones géographiques du globe. Cette technique d'exclusion de certaines zones géographiques du globe fait partie intégrante de la stratégie de limitation de la bande passante nécessaire pour transmettre les données acquises par un instrument vers le sol. Cette limitation de la bande passante est également obtenue par la compression des images effectivement acquises avant leur transfert vers le sol. Cette compression des images peut être obtenue par une grande variété d'algorithmes de compression parmi lesquels les algorithmes du type JPEG, JPEG2000, etc..

Les inventeurs ont déterminé que l'inconvénient de ces procédés connus réside d'une part dans le fait que certaines zones du globe sont totalement ignorées alors qu'elles peuvent présenter un intérêt, et d'autre part dans le fait que l'algorithme de compression ne s'adapte pas aux images acquises. C'est le cas par exemple des océans qui sont en général écartés des protocoles d'observation des zones d'activités humaines, alors que des images de ces zones pourraient révéler des données pertinentes et utiles, tels que des bateaux, des plates-formes pétrolières, etc..

En outre, la définition des zones à exclure est une tâche relativement complexe, en particulier pour les satellites en orbite basse étant donné qu'elle fait intervenir l'orbite du satellite, la rotation de la terre, etc.. De plus, sauf à ce que des données météorologiques soient communiquées en permanence au satellite, les conditions météorologiques ne sont pas connues du satellite si bien que l'instrument est susceptible de procéder à des acquisitions et transmissions d'images nuageuses sans intérêt.

De plus, la qualité de la compression d'une image fournie par les méthodes de compression connues dépend du type d'image à comprimer. En particulier, les inventeurs ont déterminé qu'un algorithme de compression efficace pour comprimer une image d'une mégapole n'est pas adapté à la compression d'une image de la forêt tropicale.

US 6031939 décrit un procédé pour optimiser la compression de données image avec une sélection automatique des conditions de compression. Dans ce procédé, plusieurs algorithmes de compression sont évalués vis-à-vis des images à comprimer ou d'images tests, et l'algorithme à utiliser est déterminé automatiquement à partir de paramètres représentatifs de l'objectif de l'utilisateur, choisis par ce dernier, et après évaluation pour chaque algorithme. Différents algorithmes peuvent être appliqués à différentes portions d'une même image. De même, La publication STEWART R J ET AL: "An adaptive technique to maximize lossless image data compression of satellite images", ROBOTICS AND COMPUTER INTEGRATED MANUFACTURING, ELSEVIER SCIENCE PUBLISHERS BV., BARKING, GB, vol. 11, no. 2, juin 1994, pages 111-115, ISSN: 0736-5845, décrit des techniques de compression sans perte d'images satellite qui sont uniquement fondées sur l'analyse de paramètres techniques (entropie, texture, régularité des motifs...) des images. Différentes techniques de codage sont appliquées en fonction des différentes entropies des différentes régions de l'image. Les performances en compression de ces procédés restent limitées par le fait que seule une analyse purement technique d'image (luminosité, texture, contraste...) est effectuée.

Il existe donc un réel besoin de disposer d'un procédé d'acquisition, de réduction et de transmission d'images d'observation de la Terre qui peut permettre une acquisition d'images de n'importe quelle zone du globe et une réduction d'images adaptée au type d'objets observés en vue d'obtenir une transmission qui permet d'aller encore plus loin dans la réduction de la bande passante, c'est à dire présente des performances supérieures en termes de compression.

L'invention vise aussi à proposer un procédé qui soit compatible avec son intégration à bord d'un système spatial, notamment qui soit simple et puisse être mise en œuvre rapidement par des ressources de traitement numérique standards.

L'invention vise à fournir un tel procédé d'acquisition, de réduction et de transmission d'images d'observation de la Terre mis en œuvre à bord d'un satellite qui permet, à quantité équivalente d'informations transmises, une utilisation réduite de la bande passante.

L'invention vise également à fournir un tel procédé mis en œuvre à bord d'un satellite qui, à bande passante équivalente, peut transmettre davantage d'informations que par un procédé de l'art antérieur.

L'invention vise également à proposer un procédé d'acquisition, de réduction et de transmission d'images d'observation de la Terre qui s'adapte aux zones survolées par le satellite.

L'invention vise également à proposer un tel procédé dont l'étape de compression fait appel à une méthode de compression spécifique fonction de chaque image acquise par le satellite.

L'invention vise également à proposer un tel procédé dont l'étape de compression fait appel à une méthode de compression spécifique fonction de chaque utilisation de chaque image acquise par le satellite.

L'invention vise également à proposer un tel procédé qui dispense un satellite mettant en œuvre ce procédé de disposer d'un programme spécifique jour/nuit qui empêcherait la prise de vue la nuit.

L'invention vise également à proposer un tel procédé qui dispense un satellite mettant en œuvre ce procédé de disposer d'un programme spécifique d'analyse de la météo pour déterminer si une couverture nuageuse est susceptible de s'opposer à la prise d'images.

Pour ce faire, l'invention concerne un procédé selon la revendication 1.

Un procédé selon l'invention permet à tous types d'instruments optiques portés par un satellite d'effectuer des acquisitions systématiques des zones survolées sans néanmoins surcharger la bande passante de transmission des images vers un dispositif distant. En outre, il n'est pas nécessaire avec un procédé selon l'invention de déterminer préalablement à l'acquisition d'une image si une acquisition de la zone en cours de survol est à effectuer. En particulier, un procédé selon l'invention évalue pour chaque image acquise par l'instrument d'observation une valeur caractéristique de l'image. Cette valeur peut être représentative du spectre de l'image, du contraste de l'image, de la luminosité de l'image, de la texture de l'image et de manière générale peut être définie par tous types d'algorithmes de traitement d'images. Cette valeur caractéristique est alors comparée à une table de valeurs caractéristiques prédéterminées. Ces valeurs prédéterminées correspondent à tous les types d'images qui peuvent être acquis par l'instrument. Par exemple, certaines valeurs caractéristiques correspondent à des images totalement masquées par la présence de nuages, d'autres correspondent à des images d'océans, d'autres à des images de déserts, etc.. Ces valeurs caractéristiques prédéterminées sont définies par expérience et sont mémorisées dans une mémoire montée à bord du satellite. Ladite table de valeurs est donc établie et mémorisée indépendamment de chaque image acquise et avant toute acquisition d'image. En outre, un procédé selon l'invention associe à chaque valeur caractéristique un algorithme de compression spécifique particulièrement adapté au type d'image en cours de traitement.

Un procédé selon l'invention permet d'optimiser l'utilisation des ressources et définit une stratégie globale de réduction de la quantité de données transmises vers le sol. Un procédé selon l'invention va au-delà de la simple compression d'images. En particulier, un procédé selon l'invention réduit une image avant de la transmettre au sol. Une telle réduction d'images comprend une étape de traitement de l'image, dite dans tout texte, étape de prétraitement, et une étape de compression de cette image prétraitée. Ce traitement initial permet de fournir une image, dite image prétraitée. Cette étape peut consister en un filtrage spatial de l'image, un seuillage de l'image, une suppression d'une partie de l'image, et de manière générale un traitement quelconque de l'image en vue de supprimer les données non nécessaires à l'intelligibilité de l'image par un homme.

En particulier, avantageusement, un procédé selon l'invention comprend, pour chaque image, une étape de reconnaissance d'objets naturels prédéterminés (notamment par reconnaissance de formes et/ou textures... prédéterminées de paysages) dans l'image, dits objets originaux, et une étape subséquente de substitution de ces objets originaux par des objets de substitution. Ces objets de substitution peuvent être des objets prédéterminés ou des objets déterminés à partir des objets originaux.

Ces étapes sont avantageusement mises en œuvre au cours de l'étape de prétraitement de l'image. Ainsi, l'étape de prétraitement consiste à reconnaître des objets originaux particuliers de paysages dans l'image. Ces objets originaux sont par exemple des nuages, des zones boisées, des plages, des étangs, des bâtiments, des prairies, des étendues enneigées, des routes, des chemins forestiers, etc.. Cette étape de prétraitement substitue alors par exemple avantageusement à chaque objet original reconnu, un ou plusieurs pixels caractéristiques de cet objet original détecté. Cette étape de prétraitement peut être spécifique à l'objectif visé par l'observation. En particulier, si l'image acquise et prétraitée est destinée à révéler uniquement les espaces verts, l'étape de prétraitement peut alors chercher uniquement à détecter les objets (notamment par leurs formes et/ou textures particulières) qui ne sont pas des espaces verts (étangs, plages, etc..) et remplacer chacun de ces objets par un ou plusieurs pixels de couleurs caractéristiques (zone(s) uniforme(s)). Ainsi, ces zones peuvent être codées avec moins d'octets qu'avant la substitution, sans néanmoins dénaturer la qualité de l'image au vu de l'objectif visé par l'observation.

Selon une autre variante, la substitution peut consister à remplacer l'objet détecté par une image prédéterminée. Par exemple, chaque plage détectée est remplacée par une image de plage prédéterminée de sorte que l'impression visuelle de l'image soit conservée.

Ainsi dans un procédé selon l'invention, avantageusement, lesdits objets types sont choisis parmi des images prédéterminées et des zones uniformes.

Cette étape de substitution permet de réduire drastiquement la quantité d'octets nécessaire pour coder l'image et/ou d'augmenter la qualité des éléments non substitués. En effet, les zones substituées nécessitant moins d'octets, les zones non substituées peuvent être, à nombre d'octets équivalent pour l'image globale, codées plus finement.

Un procédé selon l'invention comprend une étape subséquente de compression de l'image prétraitée. Les algorithmes de compression peuvent être de tous types et sont déterminés en fonction des objectifs visés par la prise d'images. Les algorithmes de compression peuvent être déterminés de sorte que la quantité de données par unité de temps émise par un satellite mettant en œuvre un procédé selon l'invention soit variable à l'intérieur de limites prédéterminées. Les algorithmes peuvent également être déterminés de sorte que le débit moyen de données émises par un satellite mettant en œuvre un procédé selon l'invention soit constant.

Avantageusement et selon l'invention, au moins un algorithme -notamment chaque algorithme correspondant à une valeur caractéristique- est un algorithme de compression psycho-visuelle.

Une compression du type psycho-visuelle, c'est-à-dire une compression qui ne conserve que l'information utile pour l'intelligibilité de l'image par un humain est particulièrement efficace étant donné qu'elle assure non seulement une fonction de compression qui permet de diminuer drastiquement la quantité de données à transmettre vers un dispositif distant de réception des images, mais elle assure également une fonction traitement supplémentaire des images acquises, par exemple sous couverture nuageuse et des images de mer. En l'occurrence, si un satellite fait l'acquisition d'une image masquée par une forte couverture nuageuse, un algorithme de compression du type psycho-visuelle permet d'obtenir une forte compression de l'image sans procédure spécifique. De même, une compression du type psycho-visuelle dispense un instrument selon l'invention de disposer d'un programme spécifique jour/nuit qui empêcherait les prises de vues de nuit. En effet, une image d'une zone prise de nuit est très fortement comprimée par un module de compression du type psycho-visuelle.

Si la valeur caractéristique de l'image révèle qu'il s'agit d'une image d'une zone maritime, l'algorithme de compression sélectionné comprime très fortement l'image tout en conservant suffisamment d'information pour que l'utilisateur reconnaisse qu'il s'agit d'une zone maritime. En outre, l'algorithme de compression psycho-visuelle n'élimine que les informations superflues de sorte que si l'image contient un navire, ce dernier est conservé par l'algorithme de compression.

Un procédé selon l'invention adapte le niveau de compression et le type de compression au type d'image acquise. Le taux de compression, défini comme le gain en volume rapporté au volume initial des données, peut être très variable en fonction des images acquises. En particulier, pour une zone urbaine, le taux de compression est selon l'invention de l'ordre de 0,15 alors que pour les zones nuageuses, il est de l'ordre de 0,95.

Un satellite en orbite basse qui effectue des prises de vues systématiques des zones survolées peut réduire la quantité de données à transmettre vers le sol de plus de 50%, en moyenne par orbite, avec un procédé d'acquisition, de compression et de transmission selon l'invention. Les inventeurs ont constaté que la quantité de données transmises par un satellite en orbite basse qui effectue des prises de vues systématiques et qui met en œuvre un procédé selon l'invention est de l'ordre de la quantité de données transmises par un satellite en orbite basse qui effectue des prises de vues sélectives alors que la quantité d'informations contenues dans les données transmises est bien plus importante étant donné que l'ensemble de l'orbite du satellite est imagé. Ainsi, à bande passante équivalente, un satellite mettant en œuvre un procédé selon l'invention peut fournir bien plus d'informations utilisables qu'un satellite mettant en oeuvre un procédé de l'art antérieur. A quantité d'informations équivalentes transmises vers le sol, un satellite mettant en œuvre un procédé selon l'invention utilise moins de bande passante qu'un satellite mettant en oeuvre un procédé selon l'art antérieur.

Un procédé selon l'invention est particulièrement adapté aux instruments destinés à effectuer des prises de vue de tout le globe.

Les valeurs caractéristiques des images représentatives du contenu des images peuvent être de tous types.

Avantageusement et selon l'invention, la valeur caractéristique d'une image est représentative de l'une des caractéristiques suivantes :
- texture de l'image,
- puissance fréquentielle spatiale de l'image,
- luminance moyenne de l'image,
- contraste moyen de l'image,
- couleur prédominante de l'image,
- taux d'uniformité des couleurs de l'image,
- complexité de l'image,
- entropie de l'image.

Selon une variante de l'invention, la valeur caractéristique de l'image peut être fonction d'une ou plusieurs des caractéristiques précédemment mentionnées.

Il est à noter que le procédé selon l'invention permet (étape de prétraitement) de prendre en compte l'analyse du contenu de l'image en vue d'optimiser la compression, vis-à-vis de paramètres sémantiques spécifiques de l'application, à savoir l'observation de paysages terrestres, en détectant dans l'image acquise des objets naturels choisis parmi :
- des zones aquatiques (mers, lacs, fleuves, ...)
- des surfaces enneigées,
- des glaciers,
- des nuages,
- des zones désertiques homogènes (dunes, ...),
- des zones de végétation homogènes (forêts, cultures, ...),
- et de manière générale, n'importe quel élément naturel spécifique permettant de recourir à des mécanismes (étape de substitution) avantageux pour augmenter le taux de compression de l'image et renforcer les performances de la compression.

Avantageusement et selon l'invention, les algorithmes de compression sont choisis parmi l'ensemble comprenant :
- une compression DCT (Discrète Cosine Transform),
- une compression par ondelettes,
- une compression par fractales.

Avantageusement et selon l'invention, pour chaque image, les moyens de traitement d'images sont adaptés pour traiter une séquence d'images acquises antérieurement à cette image de sorte que ladite valeur caractéristique de cette image dépend de cette image et de cette séquence d'images acquises antérieurement. Ainsi, un procédé selon l'invention peut déterminer la valeur caractéristique d'une image, non seulement d'après le contenu intrinsèque de l'image, mais également d'après les contenus des images acquises antérieurement à cette image. En particulier, si des images successives sont proches en termes de contenu, il n'est pas nécessaire de conserver l'intégralité du contenu des images suivantes. Ainsi, si lors du traitement d'une image, il apparaît que les images acquises précédemment ont un contenu similaires à cette image -ce qui est le cas lors du survol d'une grande zone relativement homogène-, l'image prétraitée peut ne comprendre que les éléments différents par rapport aux images antérieures et une indication que l'image initiale est la somme d'une image antérieure et de ces éléments additionnels.

L'invention concerne également un instrument selon la revendication 8.

Les moyens d'acquisition d'images d'un instrument selon l'invention sont avantageusement des caméras optiques munis de capteurs CCD. Les moyens de traitement sont avantageusement des moyens numériques associés à un microprocesseur. Les moyens de comparaison sont avantageusement des moyens numériques associés à des moyens de mémorisation de la table de valeurs de correspondance, cette mémorisation étant locale ou distante. Les moyens de compression sont avantageusement des moyens numériques associés à un microprocesseur. Les moyens de transmission sont avantageusement des moyens radiofréquences de transmission de données entre un satellite et la Terre.

Un instrument selon l'invention met avantageusement en œuvre un procédé selon l'invention et un procédé selon l'invention est avantageusement mis en œuvre par un instrument selon l'invention.

L'invention concerne également un procédé d'acquisition, de compression et de transmission d'images satellitaires d'observation de la Terre et un instrument mettant en œuvre un tel procédé, caractérisés en combinaison par tout ou partie des caractéristiques mentionnées ci-dessus ou ci-après.

D'autres buts, caractéristiques et avantages de l'invention apparaîtront à la lecture de la description suivante donnée à titre uniquement non limitatif et qui se réfère aux figures annexées, dans lesquelles :
- la figure 1 est un organigramme schématique d'un procédé d'acquisition, de compression et de transmission d'images satellitaires selon l'invention,
- la figure 2a est une vue schématique d'une image d'une zone urbaine, et la figure 2b, une vue schématique de la même image une fois traitée par un procédé selon l'invention.

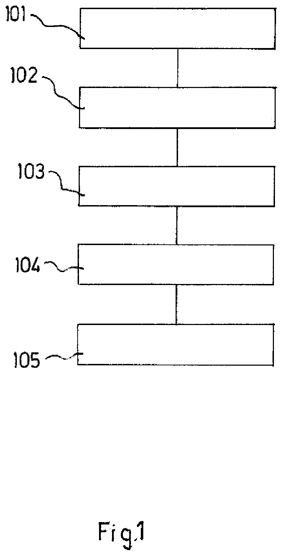

Un procédé d'acquisition, de compression et de transmission d'images satellitaires selon l'invention comprend, tel que représenté sur la figure 1, une première étape 101 d'acquisition d'images dans laquelle une image est acquise par un instrument.

Un procédé selon l'invention comprend une étape subséquente 102 de traitement de cette image en vue de fournir une valeur numérique, dite valeur caractéristique de l'image, représentative du contenu de cette image. Cette valeur caractéristique peut être de tous types. Elle peut correspondre, pour chaque image, à la texture de l'image, la puissance fréquentielle spatiale de l'image, la luminance moyenne de l'image, le contraste moyen de l'image, la couleur prédominante de l'image, le taux d'uniformité des couleurs de l'image, la complexité de l'image, l'entropie de l'image ou une fonction de deux ou plus de ces paramètres. Selon un mode de réalisation de l'invention, l'image peut être divisée en une multitude de sous-images et une valeur caractéristique de l'image peut être calculée pour chacune de ces sous-images.

Cette étape 102 de traitement permet également de fournir une image prétraitée. Ce prétraitement peut consister en un filtrage spatial de l'image, un seuillage de l'image, une suppression de certains objets de l'image et de manière générale, un traitement spécifique concourant à la réduction de la quantité de données transmises vers le sol sans néanmoins perdre de l'information utile pour l'homme.

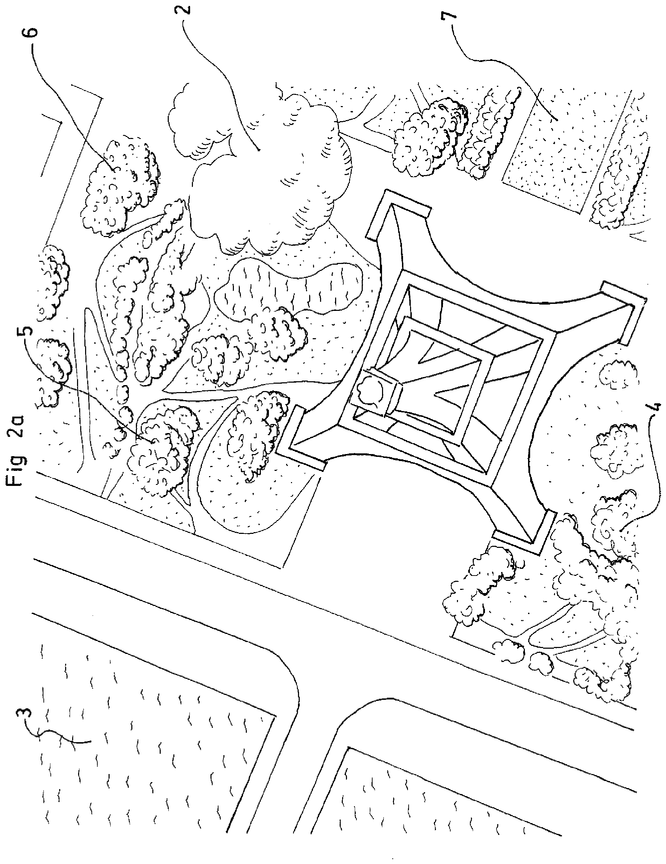

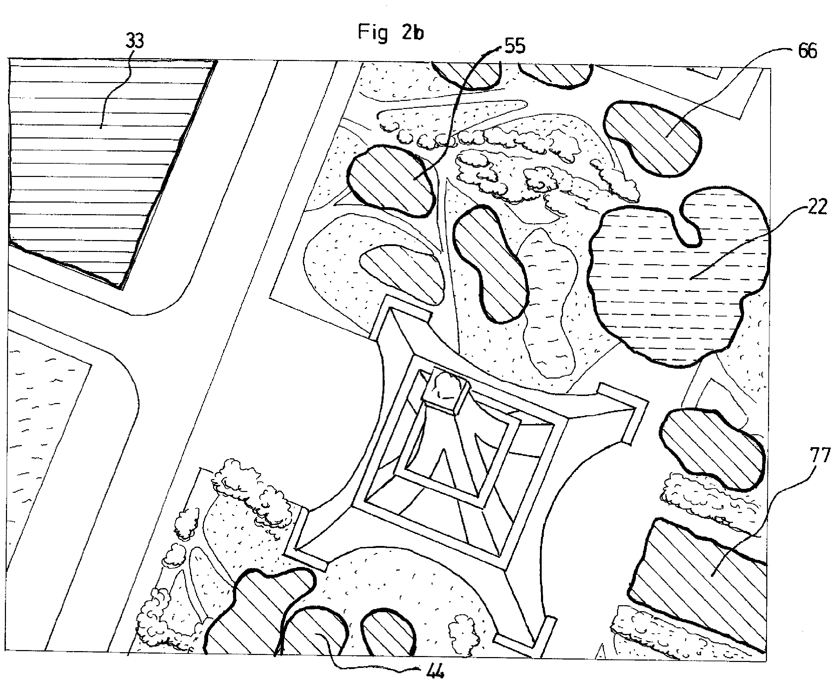

Les figures 2a et 2b présentent respectivement un exemple d'une image acquise par un instrument monté à bord d'un satellite et la même image prétraitée par un procédé selon l'invention.

La figure 2a est une vue de la Tour Eiffel sur laquelle on aperçoit, outre la Tour Eiffel, un nuage 2, une partie 3 de la Seine, des zones 4, 5, 6, boisées et une pelouse 7.

La figure 2b présente la même vue, l'image ayant été prétraitée au cours de l'étape 102 de prétraitement d'un procédé selon l'invention. On remarque que le nuage 2 a été détecté et substitué par une zone 22 uniforme blanche. De même, la partie 3 de la Seine a été détectée et remplacée par une zone 33 uniforme. Les zones boisées 4, 5, 6 ont été détectées et remplacées par des zones 44, 55, 66 également uniformes. Un procédé selon l'invention a permis de faire de la reconnaissance d'objets naturels et de les remplacer par des objets types (les zones 22, 33, 44, 55, 66, 77 uniformes) de sorte que la quantité de données nécessaires pour mémoriser l'image de la figure 2b est bien moins importante que la quantité de données nécessaire pour mémoriser l'image de la figure 2a. En outre, les données pertinentes de l'image 2a sont conservées sur l'image 2b.

De manière générale, l'étape 102 de prétraitement permet de reconnaître des objets (notamment par des formes et/ou textures particulières de paysages) dans l'image. Cette reconnaissance peut être effectuée selon des procédés de reconnaissance (automatique ou manuelle (avec intervention humaine)) d'objets dans des images à partir de paramètres pertinents permettant d'identifier l'objet. Ces objets sont par exemple des nuages, des zones boisées, des plages, des étangs, des bâtiments, des prairies, des étendues enneigées, des routes, des chemins forestiers, etc.. Cette étape de prétraitement substitue alors avantageusement chaque objet détecté par un objet type prédéterminé, notamment une image prédéterminée ou une zone uniforme prédéterminée (qui peut correspondre à une représentation uniforme de l'objet naturel détecté ou à une zone de l'image qui est effacée, l'objet étant supprimé). Par exemple, chaque nuage 2 détecté dans l'image 2a est remplacé par une image d'un nuage prédéterminé de sorte que l'impression visuelle de l'image 2b est sensiblement identique à l'image 2a alors que la quantité d'octets nécessaire pour mémoriser l'image sur un support de masse est fortement diminuée.

Un procédé selon l'invention comprend une étape subséquente 103 de comparaison de la valeur caractéristique calculée dans l'étape 102 avec une table de valeurs, dite table de correspondance, dont chaque élément de la table de correspondance est associé à un algorithme de compression spécifique. La valeur caractéristique de l'image ou la fonction de valeurs caractéristiques de l'image a pour but de caractériser le type d'image acquise de manière à adapter la compression à cette image. A chaque valeur de la table de correspondance est associé un algorithme spécifique. La table de correspondance peut comprendre un grand nombre d'algorithmes différents les uns des autres. En outre, différentes valeurs peuvent être associées aux mêmes algorithmes, seuls les paramètres de l'algorithme comme le taux de compression par exemple, distinguant pour ces valeurs les algorithmes entre eux.

La table de correspondance définit par exemple une pluralité de plages de valeur dont chaque plage est associée à un algorithme de compression. Ainsi, si la valeur caractéristique évaluée à l'étape 102 appartient à une plage donnée de valeurs, l'algorithme de compression utilisé à l'étape 104 est l'algorithme associé à cette plage de valeurs à laquelle appartient la valeur caractéristique de l'image.

Un procédé selon l'invention comprend une étape subséquente 104 de compression de l'image prétraitée par l'algorithme de compression sélectionné correspondant à la valeur caractéristique déterminée à l'étape 102. Les algorithmes utilisés peuvent être de tous types connus. Néanmoins, selon un mode préférentiel de réalisation de l'invention, l'algorithme désigné à l'étape 103 est un algorithme de compression de type psycho-visuelle. Un tel algorithme est par exemple, pour une valeur caractéristique donnée, l'algorithme connu sous le nom de « JPEG 2000 ».

Un procédé selon l'invention comprend une étape subséquente 105 de transmission de l'image comprimée à l'étape 104 vers un dispositif distant de réception d'images. Un tel dispositif de réception d'images est par exemple une station de réception sol.

Selon l'invention, l'acquisition d'images peut être réalisée par tous types de moyens connus.

Le traitement des images acquises est de préférence réalisé par des moyens numériques associés à un microprocesseur. En particulier, ce traitement consiste à analyser l'image pour en extraire au moins une valeur caractéristique de l'image représentative de cette image. La valeur caractéristique de l'image peut correspondre à la texture de l'image, à la puissance fréquentielle spatiale de l'image, à la luminance moyenne de l'image, au contraste moyen de l'image, à la couleur prédominante de l'image, au taux d'uniformité des couleurs de l'image, à la complexité de l'image, etc..

Les algorithmes de compression peuvent être des algorithmes de compression DCT, par ondelettes, par fractales, etc.. Ces algorithmes sont connus de l'homme du métier et ne sont pas décrits ici en détail.

L'invention s'étend à un instrument mettant en œuvre un procédé selon l'invention. Un tel instrument d'acquisition, de réduction et de transmission d'images satellitaires comprend des moyens d'acquisition systématique d'images, des moyens de traitement de chaque image adaptés pour fournir une image prétraitée et au moins une valeur numérique, dite valeur caractéristique de l'image, représentative du contenu de l'image, des moyens de comparaison de chaque valeur caractéristique avec une table de valeurs dont chaque valeur est associée à un algorithme de compression spécifique, des moyens de compression de chaque image prétraitée mettant en œuvre l'algorithme de compression correspondant à la valeur caractéristique de l'image, et des moyens de transmission de l'image vers un dispositif distant de réception des images.

Les moyens d'acquisition d'images peuvent être de tous types. Selon un mode préférentiel de réalisation de l'invention, ces moyens d'acquisition sont des caméras numériques portées par des satellites adaptées pour prendre des images de la surface terrestre. Les moyens de prétraitement, de traitement d'images et de compression d'images sont, selon un mode préférentiel de réalisation, mis en œuvre par des moyens logiciels. Les moyens de transmission d'images sont connus de l'homme du métier et ne sont pas décrits ici en détail.

Un instrument selon l'invention met en œuvre un procédé selon l'invention et un procédé selon l'invention est avantageusement mis en œuvre par un instrument selon l'invention.

L'invention ne se limite pas aux seuls modes de réalisation décrits. En particulier, un procédé selon l'invention peut comprendre, au cours de l'étape de prétraitement d'images, tous types de substitution d'éléments naturels détectés. En outre, les moyens de détection de ces éléments naturels peuvent être de tous types, notamment fonction de la forme des éléments, de la couleur des éléments, de la texture des éléments, de la puissance fréquentielle des éléments, du contraste des éléments, de la couleur prédominante des éléments, du taux d'uniformité des couleurs des éléments, de la complexité des éléments, etc..

## Revendications

1. Procédé d'acquisition, de compression et de transmission d'images satellitaires d'observation de la Terre, dans lequel de manière systématique :
- (101) une image est acquise par un instrument porté par un satellite,
- (102) cette image est traitée par une étape de prétraitement d'images adaptée pour fournir une image prétraitée et au moins une valeur numérique, dite valeur caractéristique de l'image, représentative du contenu de l'image,
- (103) ladite valeur caractéristique est comparée à une table de valeurs dont chaque valeur est associée à un algorithme de compression,
- (104) l'algorithme de compression correspondant à ladite valeur caractéristique est mis en œuvre par des moyens de compression pour comprimer ladite image prétraitée,
- (105) ladite image comprimée est transmise par des moyens de transmission vers un dispositif distant de réception d'images,
**caractérisé en ce que** l'étape de prétraitement d'images comprend aussi :
- une étape de reconnaissance d'objets naturels prédéterminés dans l'image acquise, dits objets originaux, et
- une étape subséquente de substitution de ces objets naturels prédéterminés par des objets de substitution, lesdits objets de substitution étant choisis parmi :
∘ une zone uniforme constituée d'un ou plusieurs pixels de couleurs caractéristiques de cet objet original, et
∘ une image prédéterminée représentant cet objet original de sorte que l'impression visuelle de l'image acquise est conservée,
l'étape de substitution permettant de réduire la quantité d'octets nécessaires pour coder l'image acquise et/ou d'augmenter la qualité des éléments non substitués.

2. Procédé selon la revendication 1, **caractérisé en ce que** lesdits objets naturels prédéterminés sont reconnus parmi :
- des zones aquatiques telles que des mers, lacs, fleuves, ...
- des surfaces enneigées,
- des glaciers,
- des nuages,
- des zones désertiques homogènes telles que des dunes, ...,
- des zones de végétation homogènes telles que des forêts, cultures, ....

3. Procédé selon l'une quelconque des revendications 1 ou 2, **caractérisé en ce que**, pour chaque image, ladite étape de prétraitement traite une séquence d'images acquises antérieurement à cette image de sorte que ladite valeur caractéristique de cette image dépend de cette image et de cette séquence d'images acquises antérieurement.

4. Procédé selon l'une des revendications 1 à 3, **caractérisé en ce qu'**au moins un algorithme de compression d'image est un algorithme de compression psycho-visuelle.

5. Procédé selon la revendication 4, **caractérisé en ce que** chaque algorithme de compression d'images est un algorithme de compression psycho-visuelle.

6. Procédé selon l'une des revendications 1 à 5, **caractérisé en ce que** ladite valeur caractéristique de l'image est choisie dans un groupe comprenant la texture de l'image, la puissance fréquentielle spatiale de l'image, la luminance moyenne de l'image, le contraste moyen de l'image, la couleur prédominante de l'image, le taux d'uniformité des couleurs de l'image, la complexité de l'image, l'entropie de l'image.

7. Procédé selon l'une des revendications 1 à 6, **caractérisé en ce que** les algorithmes de compression correspondant auxdites valeurs caractéristiques sont choisis dans un groupe comprenant des algorithmes du type DCT, des algorithmes par ondelettes et des algorithmes par fractales.

8. Instrument d'acquisition, de compression et de transmission d'images satellitaires d'observation de la Terre, comprenant de manière systématique :
- des moyens d'acquisition d'images,
- des moyens de traitement de chaque image acquise adaptés pour fournir une image prétraitée et au moins une valeur caractéristique de l'image représentative de son contenu,
- des moyens de comparaison de chaque valeur caractéristique avec une table de valeurs dont chaque valeur est associée à un algorithme de compression spécifique,
- des moyens de compression de chaque image prétraitée mettant en œuvre l'algorithme de compression correspondant à la valeur caractéristique de l'image,
- des moyens de transmission de l'image comprimée vers un dispositif distant de réception des images,
**caractérisé en ce que** les moyens de traitement de chaque image acquise sont aussi adaptés pour :
- reconnaître dans l'image acquise des objets naturels prédéterminés, dits objets originaux, et
- remplacer ces objets naturels prédéterminés par des objets de substitution choisis parmi :
∘ une zone uniforme constituée d'un ou plusieurs pixels de couleurs caractéristiques de cet objet original, et
∘ une image prédéterminée représentant cet objet original de sorte que l'impression visuelle de l'image acquise est conservée,
de façon à réduire la quantité d'octets nécessaire pour coder l'image acquise et/ou augmenter la qualité des éléments non substitués.

## Patentansprüche

1. Verfahren zum Erfassen, zum Komprimieren und zum Übertragen von Erdbeobachtungs-Satellitenbildern, wobei systematisch:
- (101) ein Bild durch ein Instrument erfasst wird, das von einem Satelliten getragen wird,
- (102) dieses Bild durch einen Bildervorbehandlungsschritt behandelt wird, der ausgeführt ist, um ein vorbehandeltes Bild und mindestens einen Zahlenwert, der charakteristischer Wert des Bildes genannt wird, bereitzustellen, der repräsentativ für den Inhalt des Bildes ist,
- (103) der charakteristische Wert mit einer Wertetabelle verglichen wird, von der jeder Wert einem Komprimierungsalgorithmus zugewiesen ist,
- (104) der Komprimierungsalgorithmus, der dem charakteristischen Wert entspricht, durch Komprimierungsmittel angewendet wird, um das vorbehandelte Bild zu komprimieren,
- (105) das komprimierte Bild durch Übertragungsmittel zu einer entfernten Bilderempfangsvorrichtung übertragen wird,
**dadurch gekennzeichnet, dass** der Bildervorbehandlungsschritt ebenfalls umfasst:
- einen Schritt zum Erkennen von in dem erfassten Bild vorbestimmten natürlichen Gegenständen, Originalgegenstände genannt, und
- einen nachfolgenden Substitutionsschritt dieser vorbestimmten natürlichen Gegenstände durch Substitutionsgegenstände, wobei die Substitutionsgegenstände ausgewählt werden aus:
- einer einheitlichen Zone bestehend aus einem oder mehreren Pixeln in für diesen Originalgegenstand charakteristischen Farben, und
- einem vorbestimmten Bild, das diesen Originalgegenstand derart darstellt, dass der optische Eindruck des erfassten Bildes konserviert wird,
wobei der Substitutionsschritt ermöglicht, die Menge an Bytes zu verringern, die nötig sind, um das erfasste Bild zu codieren und/ oder die Qualität der nicht substituierten Elemente zu erhöhen.

2. Verfahren nach Anspruch 1, **dadurch gekennzeichnet, dass** die vorbestimmten natürlichen Gegenstände erkannt werden aus:
- Wasserflächen, wie Meeren, Seen, Flüsse, ...
- verschneite Oberflächen,
- Gletschern,
- Wolken,
- einheitlichen Wüstenflächen, wie Dünen, ...
- einheitlichen Vegetationszonen, wie Wälder, Kulturen, ...

3. Verfahren nach einem der Ansprüche 1 oder 2, **dadurch gekennzeichnet, dass** der Vorbehandlungsschritt bei jedem Bild eine Sequenz von Bildern behandelt, die vor diesem Bild erfasst worden sind, sodass der charakteristische Wert dieses Bildes von diesem Bild und von dieser zuvor erfassten Sequenz von Bildern abhängt.

4. Verfahren nach einem der Ansprüche 1 bis 3, **dadurch gekennzeichnet, dass** mindestens ein Bildkomprimierungsalgorithmus ein psychooptischer Komprimierungsalgorithmus ist.

5. Verfahren nach Anspruch 4, **dadurch gekennzeichnet, dass** jeder Bilderkomprimierungsalgorithmus ein psychooptischer Komprimierungsalgorithmus ist.

6. Verfahren nach einem der Ansprüche 1 bis 5, **dadurch gekennzeichnet, dass** der charakteristische Wert des Bildes aus einer Gruppe ausgewählt wird, umfassend die Textur des Bildes, die räumliche Frequenzleistung des Bildes, die mittlere Leuchtdichte des Bildes, der mittlere Kontrast des Bildes, die vorherrschende Farbe des Bildes, die Einheitlichkeitsquote der Farben des Bildes, die Komplexität des Bildes, die Entropie des Bildes.

7. Verfahren nach einem der Ansprüche 1 bis 6, **dadurch gekennzeichnet, dass** die Komprimierungsalgorithmen, die den charakteristischen Werten entsprechen, aus einer Gruppe ausgewählt werden, umfassend Algorithmen der Art DCT, Wavelet-Algorithmen, und Fraktal-Algorithmen.

8. Instrument zum Erfassen, zum Komprimieren und zum Übertragen von Erdbeobachtungs-Satellitenbildern, systematisch umfassend:
- Mittel zum Erfassen von Bildern,
- Mittel zum Behandeln jedes erfassten Bildes, die ausgeführt sind, um ein vorbehandeltes Bild und mindestens einen charakteristischen Wert des Bildes, der repräsentativ für dessen Inhalt ist, bereitzustellen,
- Mittel zum Vergleichen jedes charakteristischen Werts mit einer Wertetabelle, von der jeder Wert einem spezifischen Komprimierungsalgorithmus zugewiesen ist,
- Mittel zum Komprimieren jedes vorbehandelten Bildes, die den Komprimierungsalgorithmus anwenden, der dem charakteristischen Wert des Bildes entspricht,
- Mittel zum Übertragen des komprimierten Bildes zu einer entfernten Bilderempfangsvorrichtung,
**dadurch gekennzeichnet, dass** die Mittel zum Behandeln jedes erfassten Bildes ebenfalls ausgeführt sind, um:
- in dem erfassten Bild vorbestimmte natürliche Gegenstände, Originalgegenstände genannt, zu erkennen, und
- diese vorbestimmten natürlichen Gegenstände durch Substitutionsgegenstände zu ersetzen, die ausgewählt werden aus:
- einer einheitlichen Zone bestehend aus einem oder mehreren Pixeln in für diesen Originalgegenstand charakteristischen Farben, und
- einem vorbestimmten Bild, das diesen Originalgegenstand derart darstellt, dass der optische Eindruck des erfassten Bildes konserviert wird,
um die Menge an Bytes zu verringern, die nötig sind, um das erfasste Bild zu codieren und/ oder die Qualität der nicht substituierten Elemente zu erhöhen.

## Claims

1. A method for acquisition, processing, compression and transmission of Earth observation satellite images, wherein, systematically:
- (101) an image is acquired by an instrument carried by a satellite,
- (102) said acquired image is processed by an image preprocessing step adapted to provide a preprocessed image and at least one numerical value, referred to as the characteristic value of said acquired image, representative of the content of said image,
- (103) said characteristic value is compared with a table of values, each value of which is associated with a compression algorithm,
- (104) said compression algorithm corresponding to said characteristic value is implemented by compression means in order to compress said preprocessed image,
- (105) said compressed image is transmitted by transmission means to a remote image reception device,
**characterized in that** the image preprocessing step further comprises :
- a step of recognition of predetermined natural objects in the acquired image, referred to as original objects, and
- a subsequent step of substitution of said predetermined natural objects with substitution objects, said substitution objects being selected among :
a uniform zone constituted of one or more pixels having colors characteristic of said original object, and
a predetermined image representing said original object so that visual impression of acquired image is preserved,
the substitution step allowing to reduce the quantity of bytes necessary to code the acquired image and/or to increase the quality of elements not substituted.

2. The method as claimed in claim 1, **characterized in that** said predetermined natural objects are recognized among :
- aquatic regions such as seas, lakes, rivers,...
- snow-covered surfaces,
- glaciers,
- clouds,
- uniform desert regions such as dunes,...
- uniform vegetation regions such as forests, cultivations,...

3. The method as claimed in anyone of claims 1 or 2, **characterized in that**, for each image, said preprocessing step processes a sequence of images which were acquired before said image, so that said characteristic value of said image depends on said image and said sequence of images which were acquired before.

4. The method as claimed in anyone of claims 1 to 3, **characterized in that** at least one said compression algorithm is a psycho-visual compression algorithm.

5. The method as claimed in claim 4, **characterized in that** each said compression algorithm is a psycho-visual compression algorithm.

6. The method as claimed in claim 1 to 5, **characterized in that** said characteristic value of said image is selected from a group comprising the texture of said image, the spatial frequency power of said image, the average luminance of said image, the average contrast of said image, the predominant color of said image, a degree of uniformity of the colors of said image, a complexity of said acquired image, the entropy said image.

7. The method as claimed in claim 1 to 6, **characterized in that** the compression algorithms corresponding to said characteristic values are selected from a group comprising algorithms of the DCT type, wavelet algorithms and fractal algorithms.

8. An instrument for acquisition, compression and transmission of earth observation satellite images, which comprises systematically :
- means for acquisition of images,
- means for processing each acquired image, which are adapted to provide a preprocessed image and at least one characteristic value of the image representative of its content,
- means for comparing each characteristic value with a table of values, each value of which is associated with a specific compression algorithm,
- means for compressing each preprocessed image, implementing the compression algorithm corresponding to the characteristic value of the image,
- means for transmitting the compressed image to a remote image reception device,
**characterized in that** the processing means of each acquired image are further adapted to:
- recognize predetermined natural objects, referred to as original objects, in the acquired image, and
- to replace these predetermined natural objects with substitution objects, selected among :
a uniform zone constituted of one or more pixels having colors characteristic of said original object, and
a predetermined image representing said original object so that visual impression of acquired image is preserved,
the substitution step allowing to reduce the quantity of bytes necessary to code the acquired image and/or to increase the quality of elements not substituted.
